# EUROPÄISCHE PATENTSCHRIFT

(11) **EP 1 733 840 B1**
(45) Veröffentlichungstag und Bekanntmachung des Hinweises auf die Patenterteilung: **25.06.2008**
(21) Anmeldenummer: 06009395.2
(22) Anmeldetag: 06.05.2006
(51) Int. Cl.: B23Q 3/157, B23Q 3/155

(54) **Bearbeitungsmaschinenanordnung mit Roboter und Werkzeugmagazin**
A machine-tool system with a robot and a tool magazine
Système de machine-outil avec un robot et un magazin pour outils

(30) Priorität: 18.06.2005 DE 102005028358
(43) Veröffentlichungstag der Anmeldung: 20.12.2006
(73) Patentinhaber: Alfing Kessler Sondermaschinen GmbH, 73433 Aalen (DE)
(72) Erfinder:
(74) Vertreter: Bregenzer, Michael

(56) Entgegenhaltungen:
- EP-A- 1 004 393
- WO-A-03/013782
- PATENT ABSTRACTS OF JAPAN Bd. 1996, Nr. 11, 29. November 1996 (1996-11-29) & JP 08 187640 A (MITSUBISHI HEAVY IND LTD), 23. Juli 1996 (1996-07-23)
- PATENT ABSTRACTS OF JAPAN Bd. 013, Nr. 528 (M-898), 24. November 1989 (1989-11-24) & JP 01 216744 A (OKUMA MACH WORKS LTD), 30. August 1989 (1989-08-30)

## Beschreibung

Die Erfindung betrifft eine Bearbeitungsmaschinenanordnung mit einer mindestens eine Werkzeug-Spindel aufweisenden Bearbeitungsmaschine und mit einem Roboter mit einem mehrgelenkigen Roboterarm zum Bestücken der Bearbeitungsmaschine mit Werkzeugen aus einem Werkzeug-Vorratsspeicher für eine Werkstück-Bearbeitung und zum Entnehmen gebrauchter Werkzeuge von der Bearbeitungsmaschine und ein Verfahren zum Betreiben einer derartigen Bearbeitungsmaschinenanordnung.

Eine derartige Bearbeitungsmaschinenanordnung ist z.B. aus EP 1 004 393 A2 bekannt. Der Roboter wechselt die Werkzeuge an der Werkzeug-Spindel aus.

Bei spanabhebenden Bearbeitungsmaschinen, beispielsweise Dreh-, Fräs- und/oder Bohrmaschinen ist es ferner bekannt, Werkzeuge, beispielsweise Bohrer, Drehmeißel oder dergleichen, mit Hilfe von Kettenmagazinen bereitzustellen. Wenn eine Vielzahl von Werkzeugen notwendig ist, beispielsweise für komplexe Werkstückbearbeitungen und/oder für eine Mehrspindel-Bearbeitungsmaschine, die mit Werkzeugen zu bestücken sind, müssen die Kettenmagazine eine große Kapazität aufweisen. Die Kette wird dadurch länger, so dass man sie bei manchen Maschinen mäanderartig führt, um eine ausreichende Längenkapazität zu erzielen. Ein Kettenmagazin mit großer Kapazität benötigt viel Platz und ist schwer. Zudem nimmt die Geschwindigkeit des Werkzeugwechsels bei größerer Kettenlänge ab. In einem Szenario, bei dem zwei erforderliche Werkzeuge z.B. an entgegengesetzten Abschnitten einer bidirektional beweglichen Kette gespeichert sind, muss die Kette bei einem Wechsel dieser Werkzeuge einen Weg entsprechend einer halben Kettenlänge durchführen. Bei einer langen Kette führt dies zu einer deutlichen Einbuße bei der Werkzeug-Bereitstellungszeit.

Es ist daher die Aufgabe der vorliegenden Erfindung, bei einer Bearbeitungsmaschinenanordnung der eingangs genannten Art den Werkzeugwechsel zu verbessern.

Zur Lösung der Aufgabe ist eine Bearbeitungsmaschinenanordnung gemäß der technischen Lehre des Anspruchs 1 vorgesehen. Ferner ist zur Lösung der Aufgabe ein Verfahren zum Betreiben einer derartigen Bearbeitungsmaschinenanordnung gemäß Anspruch 26 vorgesehen.

Bei der Bearbeitungsmaschine handelt es sich zweckmäßigerweise um eine Maschine zur spanabhebenden Werkstückbearbeitung, beispielsweise eine Fräs- und/oder Bohr- und/oder Drehmaschine. Die Werkzeuge sind Drehmeißel, Bohrer, Fräsköpfe oder dergleichen.

Ein Grundgedanke der Erfindung ist, eine Vielzahl von Werkzeugen, die von der Bearbeitungsmaschine benötigt werden, in dem Werkzeug-Vorratsspeicher abzulegen. Dort holt sie der Roboter mit seinem mehrgelenkigen Roboterarm und bestückt das im Vergleich zum Vorratsspeicher wesentlich kleinere Werkzeugmagazin an der Bearbeitungsmaschine mit den jeweils benötigten Werkzeugen. Die mindestens eine Spindel - es können mehrere Spindeln vorgesehen sein - holt sich die Werkzeuge aus dem Werkzeugmagazin zur Bearbeitung der Werkstücke. Das Werkzeugmagazin ist zwischen einem Roboter-Zugriffsraum und einem Spindel-Zugriffsraum schwenkbar, so dass der Werkzeug-Haltebereich schnell in den jeweiligen Zugriffsraum für den Roboter bzw. die mindestens eine Spindel beweglich ist. Das kleine, kompakte Werkzeugmagazin, bei dem es sich auch um ein kleines Kettenmagazin, ein Scheibenmagazin mit beispielsweise 40 bis 60 Werkzeug-Haltern, eine Schwenkarmanordnung oder dergleichen handeln kann, bildet einen kleinen, schnellen Zwischenpuffer oder Zwischenspeicher zum Bereitstellen von Werkzeugen für die Spindel(n). Das Werkzeugmagazin hat beispielsweise nur 10 - 30 Prozent oder weniger Speicherkapazität im Vergleich zu dem Vorratsmagazin. Schwenkbar im Sinne der Erfindung soll auch "drehbar" heißen, so dass nicht nur eine Hin- und Herbewegung, sondern auch eine Drehbewegung prinzipiell möglich ist.

Zweckmäßigerweise sind mehrere Werkzeug-Halter in dem Werkzeug-Haltebereich vorhanden, die vorzugsweise paarweise angeordnet sind. Bei einem Werkzeug-Halterpaar ist zunächst ein Werkzeug-Halter frei, so dass dort der Roboter oder die mindestens eine Spindel ein Werkzeug ablegen können und nach einer relativen Bewegung des Roboters bzw. der Spindel in Richtung des anderen Werkzeug-Halters des Werkzeug-Halterpaars, der ein Werkzeug bereitstellt, dieses Werkzeug entnehmen kann. Die mindestens eine Spindel und Roboter legen an dem freien Werkzeug-Halter ein Werkzeug ab und holen sich ein anderes Werkzeug von dem Bereitstellungs-Werkzeug-Halter. Die beiden Werkzeug-Halter sind zweckmäßigerweise unmittelbar nebeneinander angeordnet. Für eine Mehrspindel-Bearbeitungsmaschine wird so beispielsweise eine Anordnung geschaffen, bei der abwechselnd ein Werkzeug-Halter frei und ein Werkzeug-Halter belegt ist. Nur während der kurzen Phase des Werkzeugwechsels im Bereich des Roboter-Zugriffsraums bzw. des Spindel-Zugriffsraums sind beide Werkzeug-Halter eines Werkzeug-Halterpaares kurzzeitig mit Werkzeugen belegt.

Das oder die Werkzeug-Halterpaare können verstellbar an einem Basisteil des Werkzeugmagazins angeordnet sein, um den freien Werkzeug-Halter bzw. den belegten Werkzeug-Halter bezüglich der mindestens einen Spindel zu positionieren. Zweckmäßigerweise nutzt man allerdings die Positionierbarkeit der Werkzeug-Spindel(n), um den freien Werkzeug-Halter bzw. den mit einem Werkzeug belegten Bereitstellungs-Werkzeug-Halter anzufahren.

Das Werkzeugmagazin enthält zweckmäßigerweise mindestens eine Rotationsverstelleinrichtung zum Drehen und/oder mindestens eine Linearverstelleinrichtung zur linearen Verstellung des mindestens einen Werkzeug-Haltebereichs. Somit kann eine sequentielle oder überlagerte rotatorische und translatorische Verstellung durchgeführt werden.

Der Werkzeug-Haltebereich ist zweckmäßigerweise an einem im wesentlichen formstabilen Basisteil angeordnet. Das mindestens eine Basisteil umfasst zweckmäßigerweise mindestens einen Schwenkarm, an dem der Werkzeug-Haltebereich angeordnet ist. Der Schwenkarm ist vom Roboter-Zugriffsraum in den Spindel-Zugriffsraum und umgekehrt schwenkbar. Das Basisteil ist vorteilhaft rotatorisch, das heißt auch schwenkbar beweglich, um den Werkzeug-Haltebereich zwischen dem Roboter-Zugriffsraum und dem Spindel-Zugriffsraum zu schwenken. Eine lineare Beweglichkeit ist ebenfalls zweckmäßig.

Das Werkzeugmagazin enthält zweckmäßigerweise mindestens zwei wechselweise in den Roboter-Zugriffsraum und den Spindel-Zugriffsraum bewegbare Werkzeug-Haltebereiche mit einem oder mehreren Werkzeug-Haltern. Dann können die Werkzeug-Spindel und der Roboter in ihrem jeweiligen Zugriffsraum gleichzeitig oder zumindest im wesentlichen gleichzeitig Werkzeuge wechseln. Dadurch wird der Werkzeugwechsel beschleunigt.

Für die mindestens zwei wechselweise in die Zugriffsräume bringbaren Werkzeug-Haltebereiche werden zwei varianten vorgeschlagen, wobei weitere Bauvarianten prinzipiell möglich sind:

Beispielsweise sind die beiden Werkzeug-Haltebereiche an einem ersten und einem zweiten Schwenkarm angeordnet, die gegensinnig in den Roboter- und den Spindel-Zugriffsraum schwenkbar sind. Zweckmäßigerweise sind die beiden Schwenkarme relativ zueinander linear positionierbar, so dass sich die beiden Schwenkarme bei einer gegensinnigen Schwenkbewegung ausweichen können. Zumindest einer der Schwenkarme führt eine lineare Ausweichbewegung bezüglich des anderen Schwenkarms durch, um so einen Bewegungsraum zu schaffen, so dass die beiden Schwenkarme, wenn sie im wesentlichen die gleiche Drehposition haben, einander nicht berühren. Dabei ist zu berücksichtigen, dass der lineare Verfahrweg so groß ist, dass gegebenenfalls an den Schwenkarmen angeordnete Werkzeuge nicht mit dem anderen Schwenkarm oder mit Werkzeugen am anderen Schwenkarm kollidieren.

Prinzipiell möglich wäre es, beide Schwenkarme linear beweglich zu gestalten, wobei eine einfache und zweckmäßige Variante vorsieht, dass nur einer der beiden Schwenkarme linear beweglich ist.

Die lineare Beweglichkeit der beiden Schwenkarme kann zu einem weiteren Zweck sinnvoll genutzt werden: Die Schwenkarme können dann nämlich im wesentlichen gleiche Werkzeugwechselpositionen beispielsweise für die Werkzeug-Spindel(n) innerhalb des Spindel-Zugriffsraums und/oder für den Roboter innerhalb des Roboter-Zugriffsraums anfahren. Die Spindel bzw. die Spindeln können dann jeweils an dieselbe Stelle bei einem Werkzeugwechsel positioniert werden, unabhängig davon, welcher Schwenkarm gerade Werkzeuge bereitstellt. Dasselbe gilt sinngemäß für den Roboter. In diesem Zusammenhang sei allerdings angemerkt, dass Roboter aufgrund ihrer verhältnismäßig freien Positionierbarkeit nicht unbedingt eine stets gleiche Werkzeug-Bestückungsposition benötigen. Die Programmieraufgabe für den Roboter wird jedoch durch die gleiche WerkzeugWechselposition innerhalb des Roboter-Zugriffsraums vereinfacht, weil sich der Roboter sozusagen nicht darum "kümmern" muss, welcher Schwenkarm gerade im Roboter-Zugriffsraum für einen Werkzeugwechsel bereitsteht.

Der zweite Schwenkarm ist zweckmäßigerweise gekröpft. Ein Kröpfabschnitt verläuft an einer Drehlagerung, die beispielsweise einen Drehantrieb enthält, des ersten Schwenkarms vorbei, so dass die Werkzeug-Halter des ersten und des mindestens einen zweiten Schenkarms in Drehachsrichtung im wesentlichen dieselben Werkzeug-Wechselpositionen einnehmen können. Der Kröpfabschnitt kompensiert einen durch die Drehlagerung bzw. den Drehantrieb bedingten linearen Versatz. Die beiden Schwenkarme können dieselbe Drehachse oder insbesondere parallele, nahe beieinander liegende Drehachsen haben.

Die mindestens zwei in den Roboter-Zugriffsraum und den Spindel-Zugriffsraum bringbaren Werkzeug-Haltebereiche können bei einer weiteren Variante der Erfindung verschiedene Bereiche einer drehbaren Haltereinrichtung sein, die im Rahmen einer Dreh- oder Schwenkbewegung simultan in den Roboter-Zugriffsraum bzw. den Spindel-Zugriffsraums drehbar bzw. schwenkbar sind. Die Halteeinrichtung ist beispielsweise eine Scheibe oder ein scheibenartiges Basisteil. Die Halteeinrichtung hat beispielsweise eine polygone, zweckmäßigerweise viereckige Außenkontur. Diese Variante ist insbesondere bei Mehrspindelmaschinen zweckmäßig. Prinzipiell möglich sind aber auch runde Außenkonturen des Basisteils, z.B. zur Verwendung bei Einspindelmaschinen.

Das Werkzeugmagazin ist zweckmäßigerweise an einem Gestell der Bearbeitungsmaschine angeordnet. Somit bildet das Werkzeugmagazin einen Bestandteil der Bearbeitungsmaschine.

In einer besonders bevorzugten Variante der Erfindung ist die Bearbeitungsmaschine eine Mehrspindelmaschine mit mindestens zwei entlang einer Linie, insbesondere einer Geraden, nebeneinander angeordneten Werkzeug-Spindeln. Die Werkzeug-Spindeln sind beispielsweise in einer horizontalen oder einer vertikalen Achse nebeneinander bzw. übereinander gruppiert. Der oder die Werkzeug-Haltebereich(e) des Werkzeugmagazins haben Werkzeug-Halter, die entsprechend der Linie der nebeneinander angeordneten Werkzeug-Spindeln gruppiert sind, so dass die Werkzeug-Spindeln von den Werkzeug-Haltern simultan mehrere Werkzeuge entnehmen und dort ablegen können. Dadurch wird der Werkzeugwechsel beschleunigt. Es versteht sich, dass die Werkzeug-Spindeln beispielsweise entlang einer geraden oder gezackten Linie, einer Bogenlinie, einer Polygon-Linie oder dergleichen nebeneinander, übereinander oder in sonstiger Weise gruppiert sein können.

An dem Roboter ist vorteilhafterweise eine Werkzeug-Halterung angeordnet, die entsprechend der Gruppierung der Werkzeug-Spindeln nebeneinander angeordnete Werkzeug-Halter ausweist. Somit kann der Roboter simultan von den Werkzeug-Haltern des Werkzeugmagazins mehrere Werkzeuge entnehmen und dort ablegen. Dies beschleunigt den Werkzeugwechsel.

Der Vorratsspeicher enthält mindestens ein Gestell, das zweckmäßigerweise eine schrankartige Gestalt aufweist, um dort Werkzeuge zu speichern. Vorteilhafterweise sind mehrere Gestelle bzw. Werkzeugschränke ringartig um den Roboter gruppiert, so dass der mehrgelenkige Roboterarm die Werkzeuge in den Gestellen ergreifen bzw. dort ablegen kann. Die Gestelle können aber auch etnlang mindestens eine Reihenlinie nebeneinander und/oder hintereinander angeordnet sein.

Bei dem oder den Gestell(en) sind vorteilhafterweise mehrere Werkzeug-Haltergruppen vorhanden, bei denen Werkzeug-Halter entsprechend der Gruppierung der Werkzeug-Spindeln bei der Mehrspindelmaschine, beispielsweise entsprechend der Linie nebeneinander angeordneter Werkzeug-Halter vorhanden sind. Der Roboterarm kann mit seiner Werkzeug-Halterung simultan von den Werkzeug-Haltern einer Werkzeug-Haltergruppe mehrere Werkzeuge entnehmen oder dort ablegen. In diesem Zusammenhang sei erwähnt, dass die Haltergruppen ebenfalls zweckmäßigerweise nebeneinander angeordnete, insbesondere einander abwechselnd, freie Plätze und belegte Plätze aufweisen können, so dass das Ablegen bzw. Aufnehmen von Werkzeugen mit kurzen Wegen durch den Roboter realisierbar ist.

Der Roboter ist in einem Roboter-Arbeitsraum angeordnet, zu dem hin das mindestens eine Gestell vorderseitig offen und für den Roboter zugänglich ist. Das Gestell ist zweckmäßigerweise rückseitig geschlossen, so dass ein Werker nicht in den Roboter-Arbeitsraum eingreifen kann. Das Gestell bzw. die Gestelle des Vorratsspeichers bilden vorteilhafterweise einen Bestandteil einer Abschrankung des Roboter-Arbeitsraumes.

Nachfolgend werden Ausführungsbeispiele der Erfindung anhand der Zeichnung erläutert: Es zeigen:
- Figur 1: eine erfindungsgemäße Bearbeitungsmaschinenanordnung mit einem Roboter, einer Mehrspindel-Bearbeitungsmaschine mit horizontal angeordneten Spindeln sowie einem Werkzeugmagazin an der Bearbeitungsmaschine mit einem Schwenkarm von vorn,
- Figur 2: die Bearbeitungsmaschinenanordnung gemäß Figur 1 von oben,
- Figuren 3a bis d: einen Schwenkvorgang des Schwenkarms der Be-arbeitungsmaschinenanordnung gemäß Figuren 1 und 2,
- Figuren 4a bis d: ein zweites Ausführungsbeispiel eines erfindungsgemäßen Werkzeugmagazins mit zwei Schwenkarmen bei einem gegensinnigen Schwenkvorgang,
- Figuren 5a, 5b: ein Weiterbildung des Werkzeugmagazins gemäß Figuren 4a bis d mit einer zusätzlichen Linear-Verfahrbewegung im Bereich eines Roboter-Zugriffsraums für den Roboter gemäß Figuren 1, 2,
- Figur 6: ein zweites Ausführungsbeispiel einer erfindungsgemäßen Bearbeitungsmaschinenanordnung mit einem scheiben- oder plattenartigen Dreh-Werkzeugmagazin in einer Ansicht schräg von oben,
- Figur 6a: einen Ausschnitt S aus Figur 6, und
- Figur 7: eine weitere perspektivische Ansicht schräg von oben der Bearbeitungsmaschinenanordnung gemäß Figur 6.

Eine Bearbeitungsmaschine 11, z.B. eine Fräs- und/oder Bohr-und/oder Drehmaschine, zur spanabhebenden Bearbeitung von insbesondere metallischen Werkstücken einer Bearbeitungsmaschinenanordnung 10 wird von einem Roboter 12 mit Werkzeugen 13 versorgt. Der Roboter 12 ist innerhalb eines Roboter-Arbeitsraums 14 beweglich und holt mit seinem mehrgelenkigen Roboterarm 15 die Werkzeuge 13 aus Gestellen 16-20 eines Vorratsspeichers 21 und legt gebrauchte Werkzeuge 13 in den Gestellen 16-20 ab. Mit einer Werkzeug-Halterung 22, die beim Ausführungsbeispiel vier Werkzeug-Halter 23 aufweist, nimmt der Roboter 12 eine Mehrzahl von Werkzeugen 13, vorliegend maximal vier, gleichzeitig aus einem der Gestelle 16-20. Sodann bewegt der Roboter 12 die aufgenommenen Werkzeuge 13 zu einem Werkzeugmagazin 24 an der Bearbeitungsmaschine 11. Dabei bewegt der Roboter seinen Roboterarm 15 und dreht sich beispielsweise um eine vertikale Drehachse 25, bis er die in gestrichelten Linien eingezeichnete Bestückungsstellung zur Bestückung des Werkzeugmagazins 24 mit Werkzeugen 13 erreicht hat.

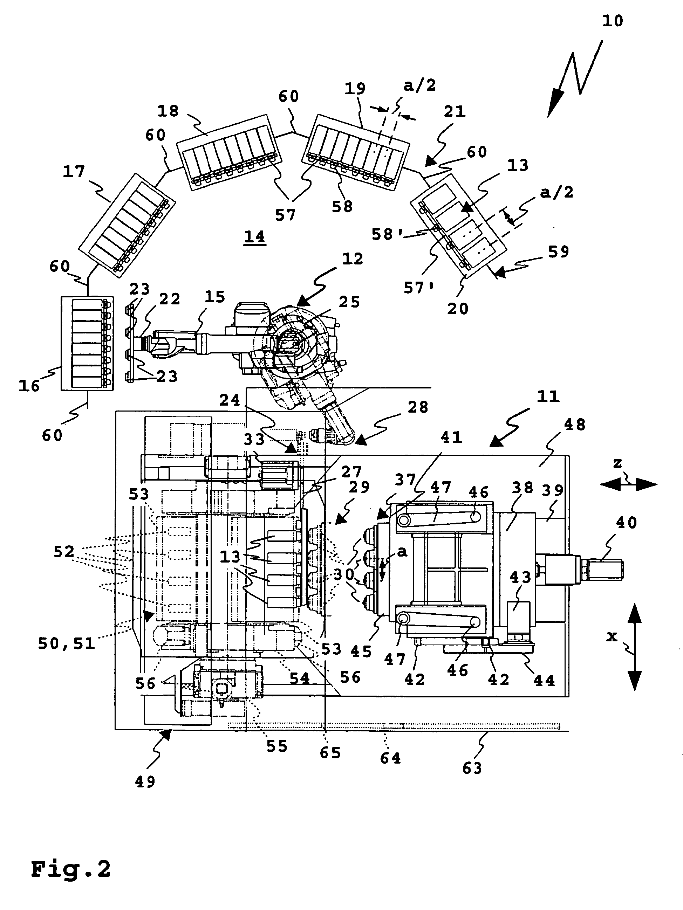

Ein Basisteil 26 in Gestalt eines Schwenkarms 27 des Werkzeugmagazins 24 ist zwischen einem Roboter-Zugriffsraum 28, wo der Roboter 12 Zugriff zu dem Schwenkarm 27 hat, beispielsweise in der in Figur 2 gestrichelt dargestellten Bestückungsstellung, und einem Spindel-Zugriffsraum 29 für einen Werkzeugwechsel an einer oder mehreren Werkzeug-Spindeln 30 der Bearbeitungsmaschine 11 schwenkbar. Das Werkzeugmagazin 24 nimmt vom Roboter 12 bereitgestellte neue Werkzeuge 13 mit Werkzeug-Haltern 31 an einem Werkzeug-Haltebereich 32 des Schwenkarms 27 auf. Die Werkzeug-Halter 31 sind vorliegend gabelartig, wobei andersartige Aufnahmen, beispielsweise Greifer, Aufnahmeringe oder dergleichen ohne weiteres möglich sind. Sodann schwenkt ein Schwenkantrieb 33, der an einem nach oben vorstehenden Halteabschnitt 76 eines Halters 34 angeordnet ist, das an dem Halter 34 drehbar gelagerte Basisteil 26 in den Spindel-Zugriffsraum 29. Der Schwenkantrieb 33 bildet eine Rotationsverstelleinrichtung.

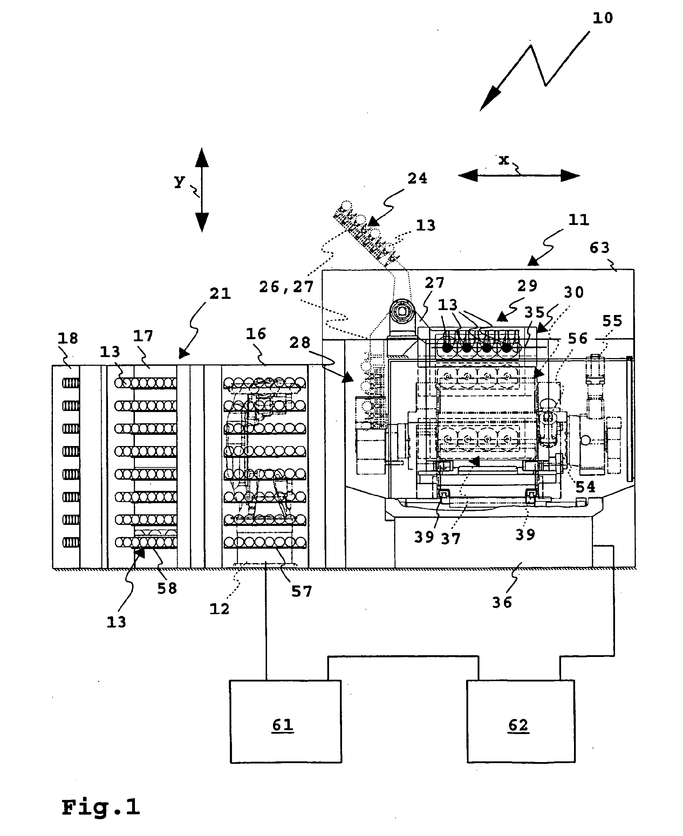

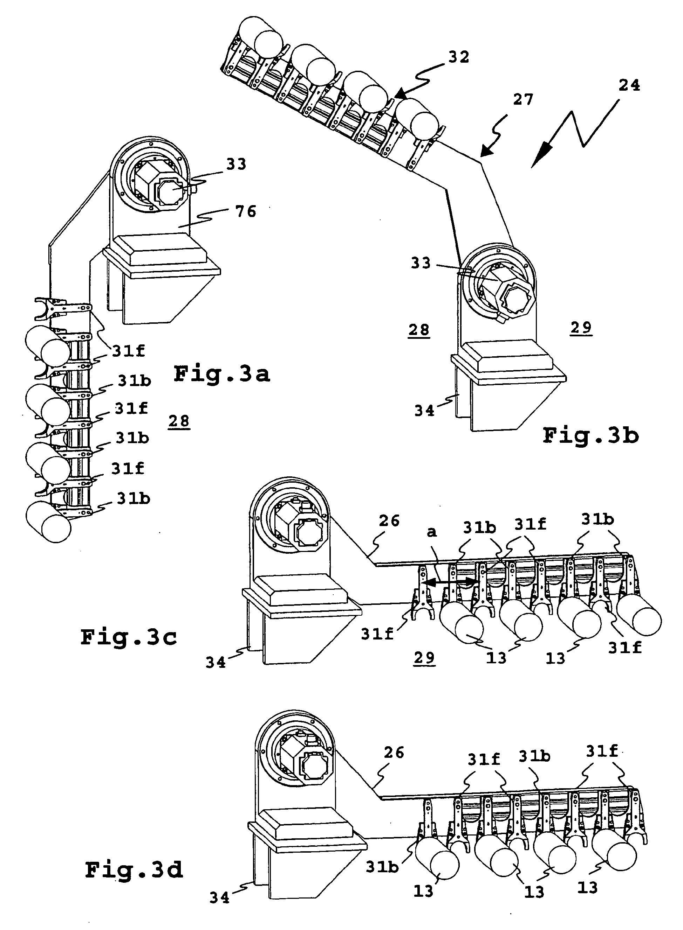

In den Figuren 3a bis 3d sind verschiedene Schwenkstellungen gezeigt, wobei beispielsweise Figur 3a den Schwenkarm 27 im Bereich des Roboter-Zugriffsraums 28 zeigt, Figur 3b den Schwenkarm bei seiner Schwenkbewegung in Richtung des Spindel-Zugriffsraums 29, wo der Schwenkarm 27 in den Figuren 3c und 3d anschließend ist. Es versteht sich, dass auch eine vollständige Drehbewegung, wenn entsprechender Bewegungsraum vorhanden ist, im Rahmen der Erfindung als eine Schwenkbewegung angesehen wird. Im Spindel-Zugriffsraum 29 legen die Spindeln 30 zunächst gebrauchte, z.B. in Figur 1 flächig schwarz dargestellte Werkzeuge 13 an dem Werkzeug-Haltebereich 32 ab und nehmen dort bereitgestellte neue, in Figur 1 in Kontur dargestellte Werkzeuge 13 zur weiteren Werkstückbearbeitung auf.

Die Bearbeitungsmaschine 11 ist eine spanabhebende Mehrspindel-Bearbeitungsmaschine mit im konkreten Fall vier entlang einer Linie bzw. Reihenachse 35 horizontal nebeneinander angeordneten Werkzeug-Spindeln 30. Bezüglich eines Maschinenbetts 36 sind die Spindeln 30, die insgesamt eine Spindelanordnung oder Spindelgruppe 37 bilden, horizontal in X-Richtung parallel zur Linie 35 sowie in Z-Richtung orthogonal zur Linie 35 sowie vertikal in Y-Richtung beweglich. Ein Horizontal-Schlitten 38, der an Führungen 39 des Maschinenbetts 36 geführt ist, ist in Z-Richtung beweglich und wird durch einen Antrieb 40, beispielsweise einen Kugelumlauf-Antrieb oder einen Lineardirektantrieb, in Z-Richtung nach vorn und hinten positioniert. An dem Z-Schlitten 38 ist ein in X-Richtung verfahrbarer Horizontal-Schlitten 41 an Führungen 42 geführt. Ein Antrieb 43 treibt über ein Getriebe 44 den X-Schlitten 41 an. An dem X-Schlitten wiederum ist ein Vertikal- oder Y-Schlitten 45 geführt, der die Spindelanordnung oder Spindelgruppe 37 hält. Der Horizontal-Schlitten 41, der beispielsweise turmartig ausgestaltet ist, umgibt den Vertikal-Schlitten 45 in einer zweckmäßigen Variante der Erfindung rahmenartig. Antriebe 46 treiben über Getriebe 47 den Y-Schlitten 45 an.

Vor der Spindelgruppe 37 bzw. dem Maschinengestell 48 ist eine Bearbeitungsstation 49 mit einem Werkstückwechsler 50 angeordnet. Der Werkstückwechsler 50 enthält beispielsweise eine Werkstück-Schwenkhalterung 51 zur Bereitstellung von Werkstücken 52 für die Bearbeitung mittels der Spindeln 30. Zwei in Richtung der in der Reihenachse oder Linie 35 der Spindeln 30 orientierten Werkstückhalterungen, z.B. Werkstückpaletten 53, sind an Schwenkarmpaaren 54 drehbar gelagert. Die Schwenkarmpaare 54 sind ihrerseits wiederum schwenkbar an seitlichen Schwenkhalterungen 55 schwenkbar gelagert, die sich im vorderen Bereich des Grundrahmens bzw. Maschinenbetts 36 nach oben erstrecken. Antriebe 56 an den Werkstückpaletten 53 bzw. an einer der Schwenkhalterungen 55 positionieren die Werkstückpaletten 53 durch geeignete Schwenkbewegungen vor die Spindeln 30, so dass sie von diesen bearbeitet werden können. An der jeweils nicht vor die Spindeln 30 geschwenkten Werkstückpalette 53 können während der Bearbeitung durch die Spindeln 30 Werkstücke 52 gewechselt werden. Es wäre prinzipiell möglich, den Roboter 12 für Werkstückwechsel einzusetzen, wenn dessen Arbeitsraum sich auch vor die Bearbeitungsstation 49 erstreckt, beispielsweise indem man einen Robotertyp verwendet, der nicht nur beispielsweise um die Drehachse 25 drehbar, sondern auch innerhalb seines Roboter-Arbeitsraumes verfahrbar ist.

Bei der Bearbeitungsmaschine 11 sind die Spindeln 30 entlang einer Geraden oder Reihenachse 35 nebeneinander mit gleichen Abständen a relativ zueinander angeordnet. Diesem Anordnungsraster oder Schema folgend, das heißt vorliegend in einer gleichartigen Reihenanordnung, sind die Komponenten des Vorratsspeichers 21, des Roboters 12 sowie des Werkzeugmagazins 24 ausgestaltet, so dass simultane Wechsel mehrerer Werkzeuge 13 möglich sind.

Die Werkzeug-Halter 31 sind beispielsweise entsprechend dem Abstand a nebeneinander angeordnet, so dass die Spindeln 30 simultan Werkzeugwechsel am Werkzeugmagazin 24 durchführen können. Der Werkzeugwechsel verläuft folgendermaßen:

Die Schlitten 38, 41 und 45 werden derart verfahren, dass die Spindeln 30 relativ zu dem in den Spindel-Zugriffsraum 29 geschwenkten Schwenkarm 27 so positioniert sind, dass die Spindeln 30 zunächst an freien Werkzeug-Haltern 31f (siehe Figur 3c) gebrauchte Werkzeuge 13 ablegen können. Die freien Werkzeug-Halter 31f sind zwischen den belegten, Werkzeuge 13 bereitstellenden Werkzeug-Haltern 31b, angeordnet, so dass die Werkzeug-Halter 31 wechselweise frei und belegt sind, wie man in den Figuren 3a-3d sieht. Bei einem Werkzeugwechsel sind die Spindeln 30 beispielsweise in der in Figur 1 mit durchgezogenen Linien, in Figur 2 gestrichelt gezeichneten oberen Werkzeugwechsel-Position. Die freien Werkzeug-Halter 31f und die Werkzeuge 13 enthaltenden Werkzeug-Halter 31b sind jeweils im Raster-Abstand a zueinander beabstandet. Somit kann die Spindelgruppe 37 zunächst gebrauchte Werkzeuge 13 an den freien Haltern 31f gruppenweise und simultan ablegen, beispielsweise einklinken, und dann in X-Richtung seitlich verfahren, um sich gegenüber den belegten Werkzeug-Haltern 31 zu positionieren und die dort befindlichen Werkzeuge 13 aufzunehmen. Die Figuren 3c und 3d zeigen den Schwenkarm 27 vor und nach der Entnahme neuer, durch das Werkzeugmagazin 24 bereitgestellter Werkzeuge 13. In Figur 3d sind die gebrauchten Werkzeuge 13 an den vormals freien (Figur 3c) Werkzeug-Haltern 31 angeordnet.

Sodann schwenkt der Schwenkarm 27 wieder zurück in den Roboter-Zugriffsraum 28 in einer umgekehrten Bewegung entsprechend der Figuren 3b und anschließend 3a. Der Schwenkbereich des Schwenkarms 27 umfasst zweckmäßigerweise etwa 180 Grad, im vorliegenden Fall z.B. vorteilhafterweise etwa 270 Grad. Dort entnimmt der Roboter 12 mit der Werkzeug-Halterung 22 simultan alle gebrauchten Werkzeuge 13 aus dem Werkzeugmagazin 24, weil die Werkzeug-Halter 23 entsprechend dem Rasterabstand a der Spindeln 30 an der Werkzeug-Halterung 22 angeordnet sind. Der Roboter 12 legt die gebrauchten Werkzeuge 13 in dem Vorratsspeicher 21 ab, beispielsweise in einem der Gestelle 16-20.

Bei den Gestellen 16-20 ist ebenfalls der Rasterabstand a berücksichtigt. Beispielsweise haben die Gestelle 16-20 Werkzeug-Haltergruppen 57 zur Ablage von Werkzeugen 13, bei denen Ablageplätze für die Werkzeuge 13 mit dem Rasterabstand a zueinander beabstandet sind. Bei Werkzeugen 13, deren Breite oder Durchmesser kleiner ist als das halbe Rastermaß a, ist es möglich, dass Aufnahmen 58 in einem Abstand zueinander beabstandet sind, der beispielsweise a/2 beträgt. Dies entspricht der Anordnung bzw. Beabstandung der Werkzeug-Halter 31 an dem Werkzeugmagazin 24, so dass der Roboter 12 beispielsweise zunächst gebrauchte Werkzeuge 13 an freien Ablageplätzen bzw. Werkzeug-Aufnahmen 58 ablegen und in manchen

Fällen in benachbarten Aufnahmen 58 einer Haltergruppe 57 unmittelbar daneben liegende Werkzeuge 13 aufnehmen kann, sofern deren Werkzeugtyp gerade gebraucht ist.

In dem Gestell 20 sind Werkzeuge 13 mit größerer Breite bzw. größerem Durchmesser gelagert, so dass Werkzeug-Haltergruppen 57' des Gestells 20 beim Ausführungsbeispiel nur jeweils vier Werkzeuge 13 aufnehmen können, weil Aufnahmen 58' der Werkzeug-Haltergruppen 57' breiter als der Abstand a/2 sind. In diesem Falle legt der Roboter 12 zunächst Werkzeuge 13 auf freien Aufnahmen 58' einer ersten Werkzeug-Haltergruppe 57' ab und nimmt dann neue Werkzeuge 13 von einem der Gestelle 16-20 auf, um diese anschließend im Werkzeugmagazin 24 zu positionieren.

Die Gestelle 16-20 sind vorderseitig für den Roboter 12 zugänglich und offen, zweckmäßigerweise rückseitig geschlossen. In den Zeichnungen sind Rückwände der Gestelle 16-20 aus Gründen der Übersichtlichkeit nicht dargestellt. Es ist aber zweckmäßig, dort Verschlussvorrichtungen vorzusehen, so dass die Gestelle 16-20 von hinten, das heißt außerhalb des Roboter-Arbeitsraums 14, mit neuen Werkzeugen 13 bestückbar sind. Beim Öffnen einer der Verschlussvorrichtungen schaltet zweckmäßigerweise die gesamte Bearbeitungsmaschinenanordnung 10 ab, um Verletzungen eines Werkers, der Werkzeuge 13 wechselt, zu vermeiden. Weiterhin ist als Schutzmaßnahme vorgesehen, dass die Gestelle 16-20 einen Bestandteil einer Abschrankung 59 bilden, die den Roboter-Arbeitsraum 14 begrenzt. Zwischen den Gestellen 16-20 sind Wände 60 angeordnet, die in Zusammenwirkung mit den Gestellen 16-20 eine insgesamt geschlossene Abschrankung 59 herstellen. Aus Gründen der Vereinfachung ist die Abschrankung 59 nicht vollständig dargestellt. Es ist selbstverständlich zweckmäßig, dass die Abschrankung 59 den Roboter-Arbeitsbereich oder Arbeitsraum 14 vollständig umgibt, so dass ein unbefugter Zutritt während des Betriebs der Bearbeitungsmaschinenanordnung 10 verhindert wird.

Eine in der Zeichnung nur teilweise dargestellte SchutzAbdeckung 63 umgibt die Bearbeitungsmaschine 11, wobei im Bereich des Werkzeugmagazins 24, das an dem Maschinengestell 48 befestigt ist, eine Öffnung für den Schwenkarm 27 vorgesehen ist. Ferner können im Bereich der Bearbeitungsstation 49 seitliche Öffnungen 64 in der Abdeckung 63 vorgesehen sein, so dass ein Bearbeitungsbereich der Bearbeitungsmaschine 11 zugänglich ist. Eine seitliche Öffnung 64 ist mittels einer Türanordnung 65 verschließbar.

Die Aufnahmen 58, 58' müssen nicht unbedingt in größter Präzision gefertigt sein. Insbesondere können die Haltergruppen 57, 57' verhältnismäßig einfach relativ zueinander an den Gestellen 16-20 montiert werden, bzw. angeschweißt werden, weil der Roboter 12 in einem Lernmodus die entsprechenden Positionen der Werkzeuge 13 in den Gestellen 16-20 lernen kann. Eine Roboter-Steuerung 61 "merkt sich" die Positionen der Werkzeuge 13 in den Gestellen 16-20 für einen späteren Betrieb, das heißt für Wechsel der Werkzeuge 13. Der Vorratsspeicher 21 ist somit einfacher und preisgünstiger zu fertigen.

Die Roboter-Steuerung 61 kooperiert mit einer Steuerung 62 zur Steuerung der Bearbeitungsmaschine 11, um die Positionieraufgaben und Werkzeugwechsel koordiniert durchzuführen. Bei den Steuerungen 61, 62 handelt es sich beispielsweise um CNC-Steuerungen oder sonstige Computersteuerungen. Es versteht sich, dass die Roboter-Steuerung 61 und die Bearbeitungsmaschinensteuerung 62 auch durch eine überlagerte, in der Figur nicht dargestellte Steuerung miteinander gekoppelt oder durch eine einzige Steuerung ersetzt sein können.

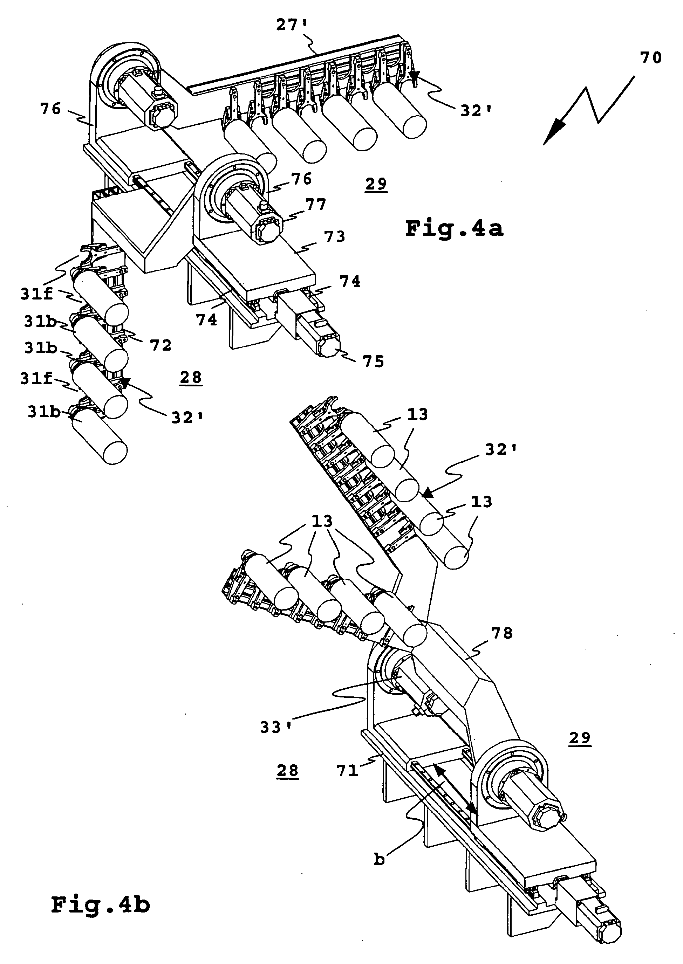

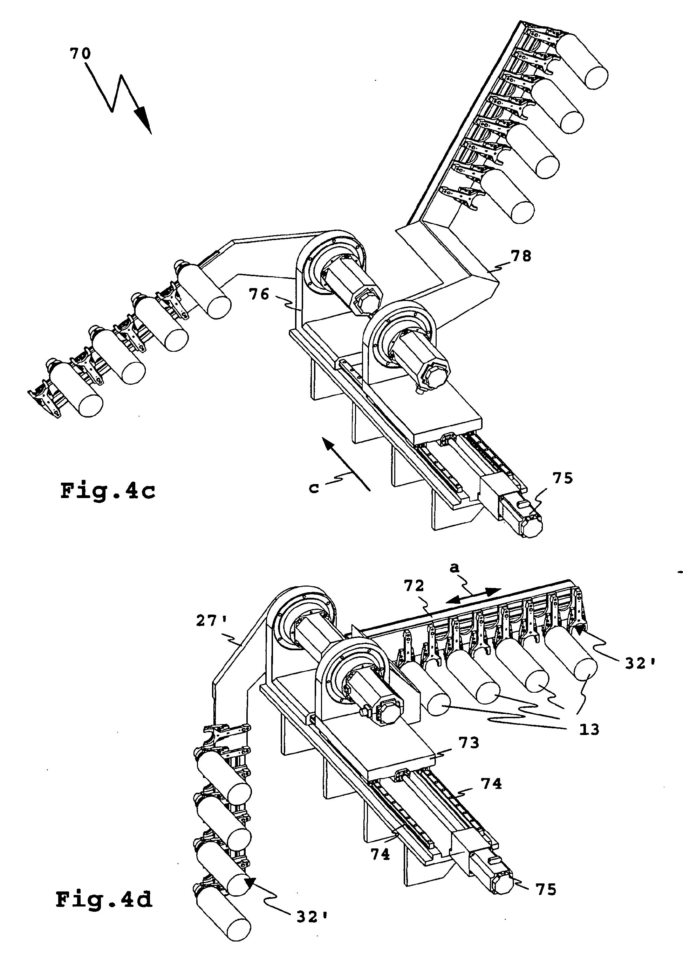

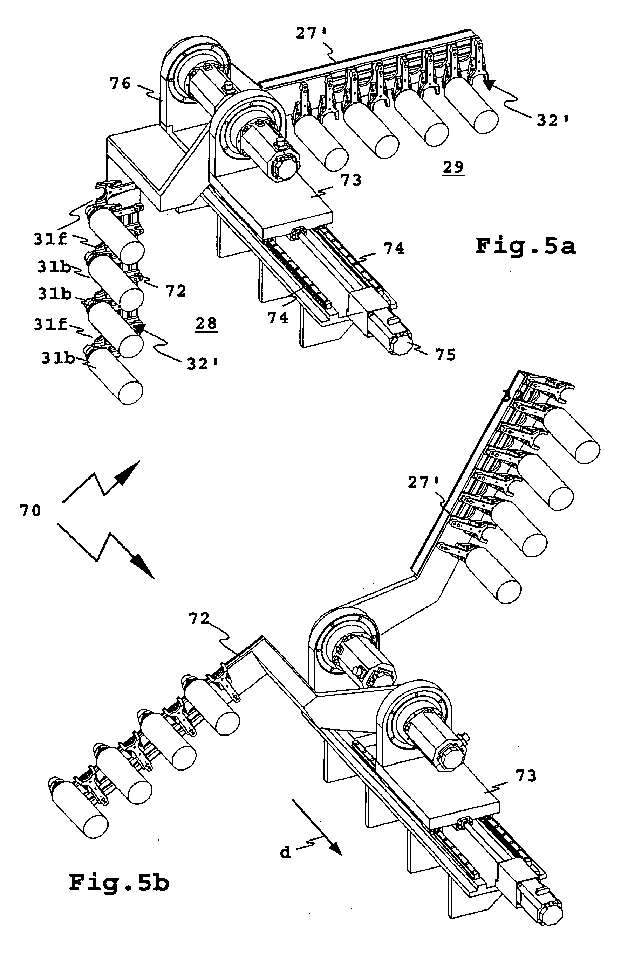

Der Schwenkarm 27 ist entweder im Roboter-Zugriffsraum 28 oder im Spindel-Zugriffsraum 29 für einen Werkzeugwechsel verfügbar, so dass entweder der Roboter 12 oder die Bearbeitungsmaschine 11 einen Werkzeugwechsel durchführen können. Ein gleichzeitiger Werkzeugwechsel oder im wesentlichen gleichzeitiger Werkzeugwechsel sowohl des Roboters 12 als auch der Bearbeitungsmaschine 11 ist bei einem Werkzeugmagazin 70 gemäß Figuren 4a-4d, 5a, 5b möglich. Das Werkzeugmagazin 70 ist alternativ zu dem Werkzeugmagazin 24 an der Bearbeitungsmaschine 11, genauer an deren Maschinengestell 48 anordenbar. Zur Vereinfachung der nachfolgenden Beschreibung sind gleiche und gleichartige Komponenten der Werkzeugmagazine 24 und 70 mit denselben Bezugszeichen versehen, zur Verdeutlichung von Unterschieden teilweise mit einem Hochkomma (') gekennzeichnet.

Ein Schwenkarm 27' ist wie der Schwenkarm 27 schwenkbar zwischen dem Roboter-Zugriffsraum 28 und den Spindel-Zugriffsraum 29. Der Schwenkarm 27' ist schwenkbar bzw. drehbar an einem Halter 71 gelagert und wird durch einen Dreh- oder Schwenk-Antrieb 33' angetrieben. Eine lineare Verstellbarkeit des Schwenkarms 27 ist nicht vorgesehen. Hingegen ist ein zweiter Schwenkarm 72 sowohl linear als auch drehbeweglich bezüglich des Halters 71. Haltebereiche 32' der Schwenkarme 27' und 72 sind gleichartig wie der Haltebereich 32, so dass der Roboter 12, wie im Zusammenhang mit dem Werkzeugmagazin 24 erläutert, gleichzeitig mehrere Werkzeuge 13 an den Werkzeug-Haltern 31 ablegen bzw. von dort aufnehmen kann.

Der Schwenkarm 72 ist schwenkbar an einem Schlitten 73 angeordnet, der an Führungen 74 linear an dem Halter 71 geführt ist. Der Halter 71 ist als eine Art Tisch mit einer beispielsweise horizontalen Oberseite ausgestaltet, auf dem der Schlitten 73 relativ zu dem Schwenkarm 27' verfahrbar ist, beim Ausführungsbeispiel in Z-Richtung. Ein Linear-Antrieb 75, beispielsweise ein elektrischer und/oder pneumatischer Kugelumlaufantrieb, Linear-Direktantrieb oder dergleichen, treibt den Schlitten 73 an. Der Linear-Antrieb 75 bildet eine Linearverstelleinrichtung. Die Schwenkarme 27', 72 sind an nach oben vorstehenden Halteabschnitten 76 des Halters 71 bzw. des Schlittens 73 schwenkbar gelagert.

Ein Antrieb 33' für den Schwenkarm 27' steht in Richtung des Schlittens 73, das heißt in Z-Richtung, nach vorne vor. In gleicher Richtung orientiert ist auch ein Antrieb 77 zum Drehen bzw. Schwenken des Dreharms bzw. Schwenkarms 72. Der Schwenkarm 72 ist gekröpft. Ein Kröpfabschnitt 78 des Schwenkarms 72 verläuft an dem Antrieb 33 des Schwenkarms 27' vorbei, z.B. parallel zur Schwenk- oder Drehachse, so dass der Schwenkarm 72 bezüglich der Z-Richtung bzw. linearen Verstellrichtung im wesentlichen dieselbe Wechselposition einnimmt wie der Schwenkarm 27', beispielsweise bezüglich des Spindel-Zugriffsraum 29, wie man in den Figuren 4a und 4d erkennen kann.

Der Linear-Antrieb 75 bzw. die lineare Verstellbarkeit des Schwenkarms 72 relativ zum Schwenkarm 27' ermöglicht eine Ausweichbewegung der beiden Schwenkarme 27', 72, wenn diese gegensinnig in den Roboter-Zugriffsraum 28 bzw. den Spindel-Zugriffsraum 29 schwenken und sich begegnen. Bei der kinematisch einfacheren Variante gemäß Figuren 4a-4d ist der Schwenkarm 72 bei der Werkzeugwechsel-Position im Roboter-Zugriffsraum 28 von dem Schwenkarm 27' beabstandet, in der Zeichnung beispielsweise nach vorn in Richtung des Antriebs 75 positioniert. Sodann schwenken beide Schwenkarme 27', 72 gegensinnig aneinander vorbei, wobei die Schwenkarme 27', 72 mit einem Linearabstand b so voneinander beabstandet sind, dass die beiden Schwenkarme 27', 72 sowie daran angeordnete

Werkzeuge 13' kollisionsfrei aneinander vorbeischwenken können. Der Linearabstand b berücksichtigt beispielsweise die Längenausdehnung der Werkzeuge 13, die beim Ausführungsbeispiel in Richtung des Schwenkarms 72 nach vorn vorstehen. Wenn die beiden Schwenkarme 27', 72 einander bei einer Drehbewegung passiert haben, fährt der Schlitten 73 in Richtung des Schwenkarms 27' entsprechend einem Pfeil c nach hinten, so dass der Schwenkarm 72 in der Werkzeugwechselposition bezüglich der Spindeln 30 im Spindel-Zugriffsraum 29 dieselben Position einnimmt wie zuvor (siehe Figur 4a) der Schwenkarm 27'.

Zwar erkennt man in Figur 4a, dass bereits bedingt durch den Kröpfabschnitt 78 ein Werkzeug-Haltebereich 32' des Schwenkarms 72 bezüglich der Z-Richtung im wesentlichen dieselbe Position in dem Roboter-Zugriffsraum 28 einnimmt, wie der entsprechende Werkzeug-Haltebereich 32' des Schwenkarms 27', siehe Figur 4d. Eine weitere Verbesserung wird jedoch dadurch erreicht, dass, wie in Figur 5a erkennbar, der Schlitten 73 auch für einen Werkzeugwechsel des Roboters 12 zum Schwenkarm 27' hin verfahren wird, so dass der Roboter 12 unabhängig davon, welcher der Schwenkarme 27', 72 in der Werkzeugwechsel-position in dem Roboter-Zugriffsraum 28 ist, die Werkzeug-Halter 31 der Werkzeug-Haltebereiche 32' der Schwenkarme 27', 72 anfahren kann. Dadurch wird die Positionierarbeit seitens des Roboters 12 erleichtert. Bei dieser kinematisch etwas aufwendigeren, jedoch zweckmäßigen Variante fährt der Schlitten 73 auch vor einem Werkzeugwechsel durch den Roboter 12 in Richtung des Schwenkarms 27', so dass auch der Roboter 12 "komfortabel" die zu wechselnden Werkzeuge 13 stets an derselben Stelle vorfindet (siehe Figur 5a). Nach dem Werkzeugwechsel durch den Roboter 12 fährt der Schlitten 73 in Richtung eines Pfeils d (siehe Figur 5b) vom Schwenkarms 27' weg, um eine Kollision der Schwenkarme 27', 72 bei einer gegensinnigen Drehung zu vermeiden.

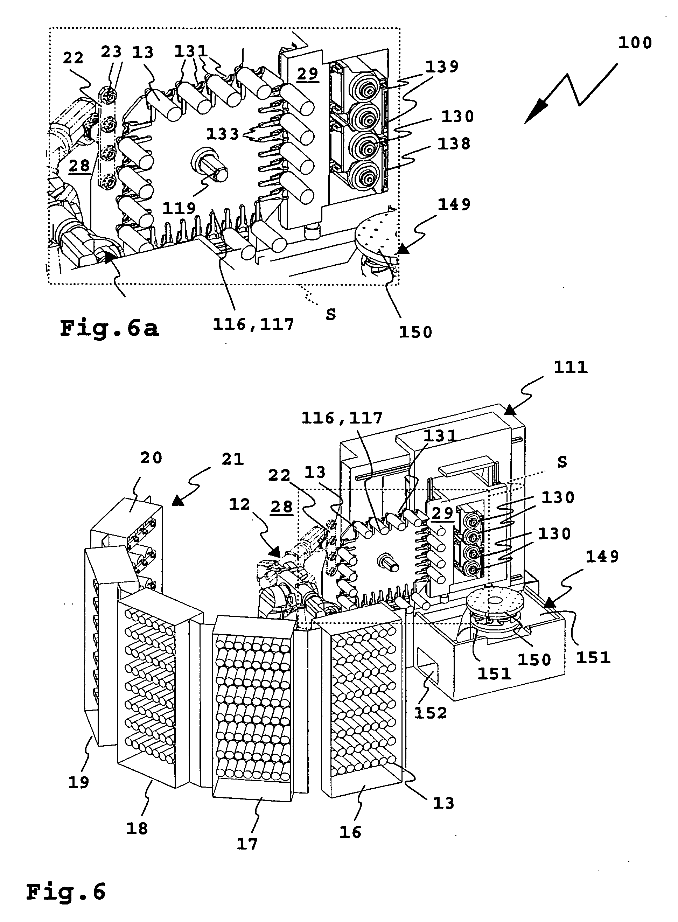

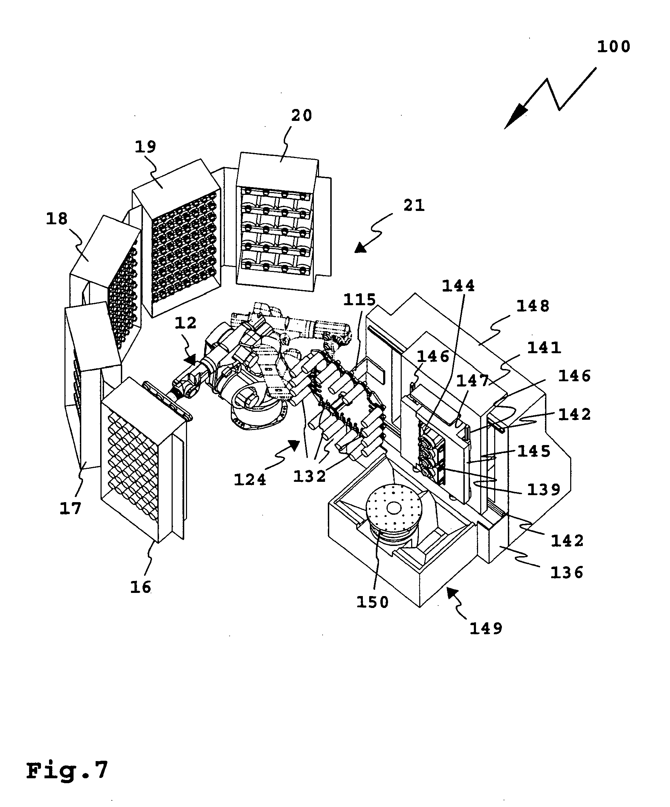

Eine Bearbeitungsmaschinenanordnung 100 gemäß Figuren 6 und 7 hat teilweise identische Komponenten wie die Bearbeitungsmaschinenanordnung 10, beispielsweise ebenfalls einen Roboter 12 und einen Vorratsspeicher 21. Anstelle der Bearbeitungsmaschine 11 ist eine Bearbeitungsmaschine 111 vorgesehen, wobei zur Vereinfachung eine Schutzabdeckung dieser Bearbeitungsmaschine 111 nicht dargestellt ist.

Die Bearbeitungsmaschine 111 ist ebenfalls eine Mehrspindelmaschine zur spanabhebenden Bearbeitung von Werkstücken 52, zweckmäßigerweise eine Fräsmaschine, Bohrmaschine oder/oder Drehmaschine. Eine Bearbeitungsstation 149 enthält einen z.B. als Drehtisch ausgestalteten Werkstücktisch 150 oder eine sonstige Vorrichtung zum Bereitstellen von Werkstücken, beispielsweise an einem Schwenkarm befestigte Werkstücktische, die wechselweise vor Werkzeug-Spindeln 130 der Bearbeitungsmaschine 111 schwenkbar sind. Bei der Bearbeitung von Werkstücken 52 anfallende Bearbeitungsrückstände, z.B. Metallspäne oder dergleichen, können in Ablaufmulden 151 seitlich neben dem Werkstücktisch 150 in Richtung eines Spanabfuhrkanals 152 abfließen, wo ein in der Figur nicht dargestelltes Spanabfuhrband oder eine sonstige Spanentfernungseinrichtung anordenbar ist. Eine Schutzverkleidung der Bearbeitungsstation 159 ist aus Gründen der Vereinfachung nicht dargestellt.

Die Spindeln 130 sind horizontal übereinander angeordnet und können individuell in Z-Richtung mittels Führungsanordnungen 139 und Linearantrieben 138, beispielsweise Linear-Direktantrieben, Kugelumlaufantrieben oder dergleichen, relativ zu der Bearbeitungsstation 149 horizontal verfahren werden.

Eine weitere horizontale Verstellbarkeit, nämlich in X-Richtung, wird durch einen Horizontal-Schlitten 141 bewirkt, der an einem Basis-Maschinengestell 148 mittels Führungen 142 verfahrbar ist. Das Maschinengestell 148 ist turmartig und bildet sozusagen einen Rahmen, an dem der X-Schlitten 141 geführt ist. Die Führungsanordnungen 142 sind beispielsweise an der Vorderseite des Maschinengestells 148 angeordnet, das sich nach oben über einem Grundgestell bzw. Maschinenbett 136 der Bearbeitungsmaschine 111 erstreckt.

An dem X-Schlitten 141 ist ein Vertikal-Schlitten oder Y-Schlitten 145 mittels Führungen 146 geführt, der mittels nicht dargestellter Antriebe vertikal verstellbar ist. Die Führungen 146 sind seitlich, vorliegend vorne, neben einer Öffnung 147 des Schlittens 141 angeordnet, wobei vorderseitige, seitliche Abschnitte des Vertikal-Schlittens 145 die Führungen 146 überdecken. In die Öffnung 147 ist der Vertikal-Schlitten 145 sozusagen eingesetzt, so dass der Horizontal-Schlitten 141 den Vertikal-Schlitten 145 rahmenartig umgibt. Dadurch wird eine hohe Verwindungssteifigkeit erzielt.

Die Werkzeug-Spindeln 130 sind abwechselnd an einander entgegengesetzten Seiten einer Öffnung 144 des Vertikal-Schlittens 145 angeordnet, so dass eine platzsparende Anordnung erzielt ist, bei der die Spindelachsen der Spindeln 130 vertikal nahe beieinander liegen, zugleich aber eine verhältnismäßig breite Stützbasis für die Führungsanordnungen 139 vorhanden ist.

Der Roboter 12 bestückt ein Werkzeugmagazin 124 mit Werkzeugen 13, wie oben bereits im Zusammenhang mit dem Werkzeugmagazin 24 beschrieben worden ist. Das Werkzeugmagazin 124 ist an der dem Roboter 12 zugewandten Seite des Maschinengestells 148 mit Hilfe eines beispielsweise winkelartigen Halters 115 befestigt. Eine Halteeinrichtung 116 mit einem Basisteil 117 ist drehbar an dem Halter 115 befestigt und enthält mehrere Werkzeug-Haltebereiche 132, beim Ausführungsbeispiel vier Haltebereiche 132, die durch vier Außenseiten des scheiben-oder plattenartigen Basisteils 117, das eine im Wesentlichen viereckige Gestalt hat, gebildet sind. Ein Antrieb 119, der eine Rotationsverstelleinrichtung bildet, treibt das Basisteil 117 an. Der Antrieb 119 dreht jeweils einen der Werkzeug-Haltebereiche 132 in den Roboter-Zugriffsraum 28 und zugleich einen anderen an einer entgegengesetzten Seite des Basisteils 117 befindlichen Werkzeug-Haltebereich 132 in den Spindel-Zugriffsraum 29, wo alle Spindeln 130 gleichzeitig Werkzeuge 13 vom jeweiligen Werkzeug-Haltebereich 132 entnehmen können bzw. gebrauchte Werkzeuge 13 dort ablegen können.

Der grundsätzliche Aufbau der Werkzeug-Haltebereiche 132 entspricht dem Aufbau des Werkzeug-Haltebereichs 32 des Schwenkarms 27, d.h. es sind pro Werkzeug-Spindel 130 jeweils zwei den Haltern 31 entsprechende Werkzeug-Halter 131 vorhanden. Jeweils zwei Werkzeug-Halter 131 bilden ein Werkzeug-Halterpaar 133, von denen ein Halter 131 bei einem Werkzeugwechsel zunächst frei ist, so dass die zugeordnete Werkzeug-Spindel 130 dort ein Werkzeug 13 ablegen kann und anschließend zum benachbarten Werkzeug-Halter 131 des Werkzeug-Halterpaars 133 verfahren wird, um dort ein bereit gestelltes Werkzeug 13 aufzunehmen.

Es wäre aber auch eine Variante denkbar, bei der pro Werkzeug-Haltebereich weniger Werkzeug-Halter 131 vorgesehen sind. Wenn entsprechend große Werkzeuge 13 verwendet werden, beispielsweise die im Gestell 20 gelagerten Werkzeuge 13, kann auch nur jeder zweite Werkzeug-Halter 131 bestückt sein. Dann können die Spindeln 130 bei einem Werkzeugwechsel zunächst an einem freien Werkzeug-Haltebereich 132 ihre aktuell montierten Werkzeuge 13 ablegen. Dann dreht das Basisteil 117 z.B. eine viertel Umdrehung weiter, so dass z.B. die dort befindlichen großvolumigen Werkzeuge 13 von den Spindeln 130 aufgenommen werden können.

Bei der in den Figuren 6 und 7 gezeigten Anordnung, bei der das Werkzeugmagazin 124 mit verhältnismäßig kleinen Werkzeugen 13 bestückt ist, bestückt der Roboter 12 den ihm zugeschwenkten bzw. zugewandten Werkzeug-Haltebereich 132 mit Werkzeugen 13, die beim jeweils übernächsten Werkzeugwechseltakt an den Spindeln 130 benötigt werden. Der Roboter 12 und die Spindeln 130 können gleichzeitig die ihnen jeweils zugewandten Werkzeug-Haltebereiche 132 für einen Werkzeugwechsel nutzen.

Es versteht sich, dass Werkzeug-Haltebereiche vorgesehen sein können, die eine andere Gruppierung bzw. Anordnungsstruktur von Werkzeug-Haltern 31, 131 haben, die zweckmäßigerweise mit der Gruppierungsstruktur der Spindeln 30, 130 korreliert, beispielsweise mit einer Zick-Zack-Linie, einem Polygon oder dergleichen. Ferner können andersartig ausgestaltete Mehrspindelmaschinen, gegebenenfalls auch Einspindelmaschinen, auf die erfindungsgemäße Weise effektiv und schnell mit Werkzeugen bestückt werden. Beispielsweise könnte man auch eine Zweispindelmaschine oder eine Fünfspindelmaschine mit Werkzeugen 13 auf die vorbeschriebene Art bestücken. Sofern eine größere Kapazität bei den als Zwischenpuffer dienenden Werkzeugmagazinen 24, 124 gewünscht ist, könnte man beispielsweise weitere Schwenkarme vorsehen oder ein anders gestaltetes Basisteil 117 mit weiteren Seitenbereichen, die sich als Werkzeug-Haltebereiche eignen, beispielsweise ein hexagonales Basisteil.

Ferner können auch kompliziertere Kinematiken bei erfindungsgemäß als Werkzeug-Zwischenpuffer dienenden Werkzeugmagazinen vorgesehen sein. So könnte man beispielsweise die Schwenkarme 27', 72 jeweils separat linear führen, so dass weitere Freiheitsgrade bezüglich der linearen Verstellbarkeit beider Schwenkarme 27', 72 gegeben ist. Jeder der Schwenkarme 27', 72 wäre dann auf einem separaten, linear an einem zugeordneten Halter, der dem Halter 71 entspricht, geführt und zweckmäßigerweise durch einen separaten Linearantrieb verstellbar. Man könnte sogar noch einen Schritt weitergehen, und einen oder mehrere der dann individuell in Z-Richtung verstellbaren Schwenkarme zusätzlich in X-Richtung verstellbar ausgestalten, beispielsweise mit Hilfe zusätzlicher Schlitten, die an den Z-Schlitten angeordnet sind. Dann wären zwei orthogonal zueinander orientierte translatorische Freiheitsgrade zusätzlich zu den Schwenk-Freiheitsgraden geschaffen.

Ferner ist es denkbar, Antriebe einzusparen, indem man anstelle mehrerer Antriebe einen Antrieb vorsieht, der über geeignete Getriebe mehrere Bewegungen durchführt. Beispielsweise könnten die Antriebe 77 und/oder 75 und/oder 33' durch einen einzigen Antrieb ersetzt werden, der über ein geeignetes Getriebe die entsprechenden Drehbewegungen bzw. linearen Verstellbewegungen bewirkt.

## Patentansprüche

1. Bearbeitungsmaschinenanordnung mit einer Bearbeitungsmaschine (11; 111) und mit einem Roboter (12) mit einem mehrgelenkigen Roboterarm (15) zum Bestücken der Bearbeitungsmaschine (11; 111) mit Werkzeugen aus einem Werkzeug-vorratsspeicher (21) für eine Werkstück-Bearbeitung und zum Entnehmen gebrauchter Werkzeuge (13) von der Bearbeitungsmaschine (11; 111), **dadurch gekennzeichnet, dass** die Bearbeitungsmaschine (11; 111) mindestens zwei Werkzeug-Spindeln (30; 130) und ein Werkzeugmagazin (24; 124) zur Bereitstellung von Werkzeugen (13) für die Bearbeitungsmaschine (11; 111) aufweist, dass das Werkzeugmagazin (24; 124) mindestens einen wechselweise in einen Roboter-Zugriffsraum (28) für einen Werkzeugwechsel durch den Roboter (12) und in einen Spindel-Zugriffsraum (29) für einen Werkzeugwechsel der mindestens zwei Werkzeug-Spindeln (30; 130) bewegbaren, insbesondere schwenkbaren, Werkzeug-Haltebereich (32, 32'; 132) mit mehreren Werkzeug-Haltern (31, 131) zum gleichzeitigen Wechseln von Werkzeugen (13) an den mindestens zwei Werkzeug-Spindeln (30; 130) aufweist.

2. Bearbeitungsmaschinenanordnung nach Anspruch 1, **dadurch gekennzeichnet, dass** von den mehreren Werkzeug-Haltern (31, 131) mindestens ein Werkzeug-Halter (31f) einen Bestandteil eines Werkzeug-Halterpaars (133) bildet, das an dem mindestens einen Werkzeug-Haltebereich (32, 32'; 132) angeordnet ist, und dass das Werkzeug-Halterpaar (133) einen zweiten Werkzeug-Halter (31b) aufweist, so dass bei einem Werkzeugwechsel der eine Werkzeug-Halter (31f) zur Ablage eines Werkzeugs zunächst frei ist und der andere Werkzeug-Halter (31b) ein Werkzeug (13) zur Entnahme durch die mindestens eine Werkzeug-Spindel (30; 130) oder den Roboter (12) bereitstellt.

3. Bearbeitungsmaschinenanordnung nach Anspruch 2, **dadurch gekennzeichnet, dass** die zwei Werkzeug-Halter (31, 131) des Werkzeug-Halterpaars (133) unmittelbar nebeneinander angeordnet sind.

4. Bearbeitungsmaschinenanordnung nach Anspruch 2 oder 3, **dadurch gekennzeichnet, dass** das Werkzeug-Halterpaar (133) relativ zu der jeweiligen Werkzeug-Spindel (30; 130) zur Positionierung des freien Werkzeug-Halters (31, 131) und des ein Werkzeug (13) bereitstellenden Werkzeug-Halters bezüglich der jeweiligen Werkzeug-Spindel (30; 130) verstellbar ist.

5. Bearbeitungsmaschinenanordnung nach einem der Ansprüche 2 bis 4, **dadurch gekennzeichnet, dass** das Werkzeug-Halterpaar (133) verstellbar an einem Basisteil (26) des Werkzeugmagazins (24; 124) angeordnet ist und/oder die mindestens eine Werkzeug-Spindel (30; 130) relativ zum dem Werkzeug-Halterpaar (133) verstellbar ist.

6. Bearbeitungsmaschinenanordnung nach einem der vorhergehenden Ansprüche, **dadurch gekennzeichnet, dass** das Werkzeugmagazin (24; 124) mindestens eine Rotationsverstelleinrichtung (33) zum Drehen und/oder mindestens eine Linearverstelleinrichtung (75) zur linearen Verstellung des mindestens einen Werkzeug-Haltebereichs (32, 32'; 132) aufweist.

7. Bearbeitungsmaschinenanordnung nach einem der vorhergehenden Ansprüche, **dadurch gekennzeichnet, dass** der mindestens eine Werkzeug-Haltebereich (32, 32'; 132) an mindestens einem im wesentlichen formsteifen Basisteil (26) vorgesehen ist.

8. Bearbeitungsmaschinenanordnung nach einem der vorhergehenden Ansprüche, **dadurch gekennzeichnet, dass** das Werkzeugmagazin (24; 124) mindestens einen Schwenkarm (27; 27', 72) umfasst, an dem der mindestens eine Werkzeug-Haltebereich (32, 32'; 132) angeordnet ist, wobei der Schwenkarm aus dem Roboter-Zugriffsraum (28) in den Spindel-Zugriffsraum (29) und umgekehrt schwenkbar ist.

9. Bearbeitungsmaschinenanordnung nach einem der vorhergehenden Ansprüche, **dadurch gekennzeichnet, dass** das Werkzeugmagazin (24; 124) mindestens zwei wechselweise in den Roboter-Zugriffsraum (28) und den Spindel-Zugriffsraum (29) bewegbare Werkzeug-Haltebereiche (32'; 132) aufweist, so dass die mindestens eine Werkzeug-Spindel (30; 130) und der Roboter (12) an jeweils einem Werkzeug-Haltebereich (32'; 132) Werkzeuge (13) im wesentlichen gleichzeitig wechseln können.

10. Bearbeitungsmaschinenanordnung nach Anspruch 9, **dadurch gekennzeichnet, dass** die mindestens zwei wechselweise in den Roboter-Zugriffsraum (28) und den Spindel-Zugriffsraum (29) bringbaren Werkzeug-Haltebereiche (32'; 132) an einem ersten und mindestens einem zweiten Schwenkarm (27', 72) angeordnet sind, die gegensinnig in den Roboter-Zugriffsraum (28) und den Spindel-Zugriffsraum (29) schwenkbar sind.

11. Hearbeitungsmaschinenanordnung nach Anspruch 10, **dadurch gekennzeichnet, dass** der erste und der mindestens eine zweite Schwenkarm (27', 72) relativ zueinander linear positionierbar sind, so dass bei einer Begegnung der Schwenkarme (27', 72) im Rahmen einer gegensinnigen Schwenkbewegung durch eine lineare Ausweichbewegung mindestens eines Schwenkarms (27', 72) ein Bewegungsraum vorhanden ist.

12. Bearbeitungsmaschinenanordnung nach Anspruch 10 oder 11, **dadurch gekennzeichnet, dass** der erste Schwenkarm (27') ausschließlich schwenkbar und der mindestens eine zweite Schwenkarm (72) schwenkbar und relativ zu dem ersten Schwenkarm (27') linear beweglich ist.

13. Bearbeitungsmaschinenanordnung nach einem der Ansprüche 10 bis 12, **dadurch gekennzeichnet, dass** der erste Schwenkarm (27') und der mindestens eine zweite Schwenkarm (72) in im wesentlichen gleiche Werkzeug-Wechselpositionen für die mindestens eine Werkzeug-Spindel (30; 130) innerhalb des Spindel-Zugriffsraums (29) und/oder für den Roboter (12) innerhalb des Roboter-Zugriffsraums (28) bewegbar sind.

14. Bearbeitungsmaschinenanordnung nach einem der Ansprüche 10 bis 13, **dadurch gekennzeichnet, dass** der mindestens eine zweite Schwenkarm (27; 27', 72) gekröpft ist, wobei ein Kröpfabschnitt an einer Drehlagerung, insbesondere einen Drehantrieb (33), des ersten Schwenkarms (27; 27', 72) vorbei verläuft.

15. Bearbeitungsmaschinenanordnung nach Anspruch 9, **dadurch gekennzeichnet, dass** die mindestens zwei in den Roboter-Zugriffsraum (28) und den Spindel-Zugriffsraum (29) bringbaren Werkzeug-Haltebereiche (32, 32'; 132) insbesondere einander entgegengesetzte Bereiche einer drehbaren Halteeinrichtung (116) sind, wobei die mindestens zwei Werkzeug-Haltebereiche (32, 32'; 132) durch eine Drehbewegung oder Schwenkbewegung simultan in den Roboter-Zugriffsraum (28) bzw. den Spindel-Zugriffsraum (29) drehbar oder schwenkbar sind.

16. Bearbeitungsmaschinenanordnung nach Anspruch 15, **dadurch gekennzeichnet, dass** die Halteeinrichtung (116) eine im wesentlichen polygone, insbesondere viereckige, oder runde Außenkontur hat.

17. Bearbeitungsmaschinenanordnung nach einem der vorhergehenden Ansprüche, **dadurch gekennzeichnet, dass** das Werkzeugmagazin (24; 124) an einem Gestell (16-20) der Bearbeitungsmaschine (11; 111) angeordnet ist.

18. Bearbeitungsmaschinenanordnung nach einem der vorhergehenden Ansprüche, **dadurch gekennzeichnet, dass** die Bearbeitungsmaschine (11; 111) eine Mehrspindelmaschine mit mindestens zwei entlang einer Linie nebeneinander angeordneten Werkzeug-Spindeln (30; 130) ist, und dass der mindestens eine Werkzeug-Haltebereich (32, 32'; 132) entsprechend der Linie nebeneinander angeordneter Werkzeug-Halter (31, 131) aufweist, so dass die mindestens zwei Werkzeug-Spindeln (30; 130) simultan von den Werkzeug-Haltern (31, 131) mehrere Werkzeuge (13) entnehmen oder dort ablegen können.

19. Bearbeitungsmaschinenanordnung nach einem der vorhergehenden Ansprüche, **dadurch gekennzeichnet, dass** die Linie im wesentliche gerade ist.

20. Bearbeitungsmaschinenanordnung nach einem der vorhergehenden Ansprüche, **dadurch gekennzeichnet, dass** am Roboterarm (15) des Roboters (12) eine Werkzeug-Halterung angeordnet ist, die entsprechend einer Konfiguration der Werkzeug-Spindeln (30; 130) der als Mehrspindelmaschine ausgestalteten Bearbeiturigsmaschine (11; 111) angeordneter Werkzeug-Halter (23) aufweist, so dass der Roboter (12) simultan von den Werkzeug-Haltern (31, 131) des Werkzeugmagazins (24; 124) mehrere Werkzeuge entnehmen oder dort ablegen kann.

21. Bearbeitungsmaschinenanordnung nach einem der vorhergehenden Ansprüche, **dadurch gekennzeichnet, dass** der Vorratsspeicher mindestens ein insbesondere schrankartiges Gestell (16-20) zum Ablegen von Werkzeugen (13) durch den Roboter (12) aufweist.

22. Bearbeitungsmaschinenanordnung nach Anspruch 21, **dadurch gekennzeichnet, dass** mehrere Gestelle (16-20) ringartig um den Roboter (12) im Zugriffsbereich des Roboterarms (15) angeordnet sind.

23. Bearbeitungsmaschinenanordnung nach Anspruch 21 oder 22, **dadurch gekennzeichnet, dass** das mindestens eine Gestell (16-20) mehrere, insbesondere vertikal übereinander und/oder horizontal nebeneinander angeordnete Werkzeug-Haltergruppen (57, 57') mit entsprechend einer Konfiguration der Werkzeug-Spindeln (30; 130) der als Mehrspindelmaschine ausgestalteten Bearbeitungsmaschine (11; 111) angeordneten Werkzeug-Haltern (31, 131) aufweist.

24. Bearbeitungsmaschinenanordnung nach einem der Ansprüche 21 bis 23, **dadurch gekennzeichnet, dass** der Roboter (12) in einem Roboter-Arbeitsraum (14) angeordnet ist, zu dem hin das mindestens eine Gestell (16-20) vorderseitig offen und für den Roboter (12) zugänglich ist, und dass das mindestens eine insbesondere rückseitig geschlossene, Gestell (16-20) einen Bestandteil einer Abschrankung (59) des Roboter-Arbeitsraums (14) bildet.

25. Bearbeitungsmaschinenanordnung nach einem der vorhergehenden Ansprüche, **dadurch gekennzeichnet, dass** der Roboter (12) für einen Werkstückwechsel von durch die Bearbeitungsmaschine (11; 111) zu bearbeitenden und bearbeiteten Werkstücken vorgesehen ist.

26. Verfahren zum Betreiben einer Bearbeitungsmaschinenanordnung (10, 100) mit einer Bearbeitungsmaschine (11; 111) und mit einem Roboter (12) mit einem mehrgelenkigen Roboterarm (15), der die Bearbeitungsmaschine (11; 111) mit Werkzeugen aus einem Werkzeug-Vorratsspeicher (21) für eine Werkstück-Bearbeitung bestückt und gebrauchte Werkzeuge (13) von der Bearbeitungsmaschine (11; 111) entnimmt, **dadurch gekennzeichnet,**
- **dass** der Roboter ein Werkzeugmagazin (24; 124) der Bearbeitungsmaschine (11; 111) mit Werkzeugen (13) aus dem Werkzeug-Vorratsspeicher (21) bestückt und gebrauchte Werkzeuge aus dem Werkzeugmagazin (24; 124) entnimmt,
- **dass** das Werkzeugmagazin (24; 124) die Werkzeuge (13) für die Bearbeitungsmaschine (11; 111) bereitstellt, und
- **dass** das Werkzeugmagazin (24; 124) mindestens einen Werkzeug-Haltebereich (32, 32'; 132) mit mehreren Werkzeug-Haltern (31, 131) wechselweise in einen Roboter-Zugriffsraum (28) für einen Werkzeugwechsel durch den Roboter (12) und in einen Spindel-Zugriffsraum (29) für einen Werkzeugwechsel zum gleichzeitigen Wechseln von Werkzeugen (13) an mindestens zwei Werkzeug-Spindeln (30; 130) der Bearbeitungsmaschinenanordnung (10, 100) bewegt, insbesondere schwenkt.

## Claims

1. Machining centre arrangement with a machining centre (11; 111) and a robot (12) with a multi-jointed robot arm (15) for supplying the machining centre (11; 111) with tools from a tool store (21) for machining workpieces and for removing used tools (13) from the machining centre (11; 111), **characterised in that** the machining centre (11; 111) comprises at least two tool spindles (30; 130) and a tool magazine (24; 124) for the provision of tools (13) for the machining centre (11; 111), and **in that** the tool magazine (24; 124) comprises at least one tool holding region (32, 32'; 132) capable of being moved, in particular pivoted, alternately into a robot access space (28) for a tool change by the robot (12) and into a spindle access space (29) for a tool change of the at least two tool spindles (30; 130) and provided with a plurality of tool holders (31, 131) for the simultaneous change of tools (13) at the at least two tool spindles (30; 130).

2. Machining centre arrangement according to claim 1, **characterised in that**, of the plurality of tool holders (31, 131) at least one tool holder (31f) forms part of a tool holder pair (133) located in the at least one tool holding region (32, 32'; 132), and **in that** the tool holder pair (133) comprises a second tool holder (31 b), so that in a tool change process the one tool holder (31f) is initially free for depositing a tool, while the other tool holder (31 b) makes available a tool (13) for removal by the at least one tool spindle (30; 130) or the robot (12).

3. Machining centre arrangement according to claim 2, **characterised in that** the two tool holders (31, 131) of the tool holder pair (133) are located immediately adjacent to one another.

4. Machining centre arrangement according to claim 2 or 3, **characterised in that** the tool holder pair (133) is adjustable relative to the tool spindle (30; 130) for positioning the free tool holder (31, 131) and the tool holder providing a tool (13) relative to the respective tool spindle (30; 130).

5. Machining centre arrangement according to any of claims 2 to 4, **characterised in that** the tool holder pair (133) is adjustably located on a base part (26) of the tool magazine (24; 124) and/or **in that** the at least one tool spindle (30; 130) is adjustable relative to the tool holder pair (133).

6. Machining centre arrangement according to any of the preceding claims, **characterised in that** the tool magazine (24; 124) comprises at least one rotary adjusting device (33) for the rotation and/or at least one linear adjusting device (75) for the linear adjustment of the at least one tool holding region (32, 32'; 132).

7. Machining centre arrangement according to any of the preceding claims, **characterised in that** the at least one tool holding region (32, 32'; 132) is provided on at least one substantially dimensionally rigid base part (26).

8. Machining centre arrangement according to any of the preceding claims, **characterised in that** the tool magazine (24; 124) includes at least one swivel arm (27; 27', 72), on which the at least one tool holding region (32, 32'; 132) is located, the swivel arm being capable of pivoting from the robot access space (28) into the spindle access space (29) and vice versa.

9. Machining centre arrangement according to any of the preceding claims, **characterised in that** the tool magazine (24; 124) comprises at least two tool holding regions (32'; 132) capable of alternately moving into the robot access space (28) and the spindle access space (29), so that the at least one tool spindle (30; 130) and the robot (12) can change tools (13) substantially simultaneously in a tool holding region (32'; 132) each.

10. Machining centre arrangement according to claim 9, **characterised in that** the at least two tool holding regions (32'; 132) capable of alternately moving into the robot access space (28) and the spindle access space (29) are located on a first and at least one second swivel arm (27', 72), which are capable of pivoting in opposite directions into the robot access space (28) and the spindle access space (29).

11. Machining centre arrangement according to claim 10, **characterised in that** the first and the at least one second swivel arm (27', 72) can be positioned relative to one another in a linear direction, so that, when the swivel arms (27', 72) meet in the course of a pivoting movement in opposite directions, a working range is created by a linear diversion movement of at least one swivel arm (27', 72).

12. Machining centre arrangement according to claim 10 or 11, **characterised in that** the first swivel arm (27') is only pivotable and the at least one second swivel arm (72) is pivotable and capable or linear movement relative to the first swivel arm (27').

13. Machining centre arrangement according to any of claims 10 to 12, **characterised in that** the first swivel arm (27') and the at least one second swivel arm (72) are capable of moving to substantially identical tool change positions for the at least one tool spindle (30; 130) within the spindle access space (29) and/or for the robot (12) in the robot access space (28).

14. Machining centre arrangement according to any of claims 10 to 13, **characterised in that** the at least one second swivel arm (27; 27', 72) is offset, an offset section extending past a rotary mount, in particular a rotary drive (33), of the first swivel arm (27; 27', 72).

15. Machining centre arrangement according to claim 9, **characterised in that** the at least two tool holding regions (32, 32'; 132) capable of moving into the robot access space (28) and the spindle access space (29) are in particular opposite regions of a rotatable retaining device (116), wherein the at least two tool holding regions (32, 32'; 132) are simultaneously rotatable or pivotable into the robot access space (28) or the spindle access space (29) in a rotary or pivoting movement.

16. Machining centre arrangement according to claim 15, **characterised in that** the retaining device (116) has a substantially polygonal, in particular quadrangular, or circular external contour.

17. Machining centre arrangement according to any of the preceding claims, **characterised in that** the tool magazine (24; 124) is located on a rack (16-20) of the machining centre (11; 111).

18. Machining centre arrangement according to any of the preceding claims, **characterised in that** the machining centre (11; 111) is a multi-spindle machine with at least two tool spindles (30; 130) arranged side by side along a line, and **in that** the at least one tool holding region (32, 32'; 132) comprises tool holders (31, 131) arranged side by side in accordance with the said line, so that the at least two tool spindles (30; 130) can simultaneously remove tools (13) from the tool holders (31, 131) or deposit them thereon.

19. Machining centre arrangement according to any of the preceding claims, **characterised in that** the line is substantially straight.

20. Machining centre arrangement according to any of the preceding claims, **characterised in that** the robot arm (15) of the robot (12) supports a tool mount, which comprises tool holders (23) arranged in accordance with a configuration of the tool spindles (30; 130) of the machining centre (11; 111) designed as a multi-spindle machine, so that the robot (12) can simultaneously remove several tools from the tool holders (31, 131) of the tool magazine (24; 124) or deposit them thereon.

21. Machining centre arrangement according to any of the preceding claims, **characterised in that** the tool store comprises at least one in particular cabinet-like rack (16-20) for the deposition of tools (13) by the robot (12).

22. Machining centre arrangement according to claim 21, **characterised in that** several racks (16-20) are arranged around the robot (12) in the manner of a ring in the access region of the robot arm (15).

23. Machining centre arrangement according to claim 21 or 22, **characterised in that** the at least one rack (16-20) comprises a plurality of tool holder groups (57, 57') arranged in particular vertically on top of one another and/or horizontally adjacent to one another and comprising tool holders (31, 131) arranged in accordance with a configuration of the tool spindles (30; 130) of the machining centre (11; 111) designed as a multi-spindle machine.

24. Machining centre arrangement according to any of claims 21 to 23, **characterised in that** the robot (12) is located in a robot working space (14), towards which the at least one rack (16-20) is open at the front and accessible to the robot (12), and **in that** the at least one rack (16-20), which is in particular closed at the rear, is part of a safety cage (59) of the robot working space (14).

25. Machining centre arrangement according to any of the preceding claims, **characterised in that** the robot (12) is designed for loading and unloading workpieces which are to be machined and have been machined by the machining centre (11; 111).

26. Method for the operation of a machining centre arrangement (10, 100) with a machining centre (11; 111) and a robot (12) with a multi-jointed robot arm (15) for supplying the machining centre (11; 111) with tools from a tool store (21) for machining workpieces and for removing used tools (13) from the machining centre (11; 111), **characterised in that**:
- the robot supplies a tool magazine (24; 124) of the machining centre (11; 111) with tools (13) from the tool store (21) and removes used tools from the tool magazine (24; 124),
- the tool magazine (24; 124) makes the tools (13) available to the machining centre (11; 111), and
- the tool magazine (24; 124) moves, in particular pivots, at least one tool holding region (32, 32'; 132) with a plurality of tool holders (31, 131) alternately into a robot access space (28) for a tool change by the robot (12) or into a spindle access space (29) for a simultaneous change of tools (13) on at least two tool spindles (30; 130) of the machining centre arrangement (10, 100).

## Revendications

1. Agencement de machine d'usinage comprenant une machine d'usinage (11 ; 111) et un robot (12) avec un bras de robot (15) à plusieurs articulations pour l'équipement de la machine d'usinage (11 ; 111) avec des outils provenant d'une réserve d'outils (21) pour un usinage de pièce et pour le prélèvement d'outils (13) usés de la machine d'usinage (11 ; 111), **caractérisé en ce que** la machine d'usinage (11 ; 111) présente au moins deux broches d'outil (30 ; 130) et un chargeur d'outil (24 ; 124) pour la mise à disposition d'outils (13) pour la machine d'usinage (11 ; 111), **en ce que** le chargeur d'outil (24 ; 124) présente au moins une zone de maintien d'outil (32, 32' ; 132) pouvant être déplacée, en particulier de façon basculante, alternativement dans un espace d'accès de robot (28) pour un changement d'outil par le robot (12) et dans un espace d'accès de broche (29) pour un changement d'outil des au moins deux broches d'outil (30 ; 130), avec plusieurs porte-outils (31, 131) pour le changement simultané d'outils (13) sur les au moins deux broches d'outil (30 ; 130).

2. Agencement de machine d'usinage selon la revendication 1, **caractérisé en ce que**, sur les plusieurs porte-outils (31, 131), au moins un porte-outil (31f) forme un composant d'une paire de porte-outils (133) qui est disposée sur la au moins une zone de maintien d'outil (32, 32' ; 132), et **en ce que** la paire de porte-outils (133) présente un second porte-outil (31 b), de sorte que, lors d'un changement d'outil, l'un des porte-outils (31f) est d'abord libre pour le dépôt d'un outil et l'autre porte-outil (31 b) met à disposition un outil (13) pour le prélèvement par la au moins une broche d'outil (30 ; 130) ou le robot (12).

3. Agencement de machine d'usinage selon la revendication 2, **caractérisé en ce que** les deux porte-outils (31, 131) de la paire de porte-outils (133) sont disposés directement l'un à côté de l'autre.

4. Agencement de machine d'usinage selon la revendication 2 ou 3, **caractérisé en ce que** la paire de porte-outils (133) peut être déplacée par rapport à la broche d'outil (30 ; 130) respective pour le positionnement du porte-outil (31, 131) libre et du porte-outil mettant à disposition un outil (13) par rapport à la broche d'outil (30 ; 130) respective.

5. Agencement de machine d'usinage selon l'une quelconque des revendications 2 à 4, **caractérisé en ce que** la paire de porte-outils (133) est disposée de façon déplaçable sur une partie de base (26) du chargeur d'outil (24 ; 124) et/ou la au moins une broche d'outil (30 ; 130) peut être déplacée par rapport à la paire de porte-outils (133).

6. Agencement de machine d'usinage selon l'une quelconque des revendications précédentes, **caractérisé en ce que** le chargeur d'outil (24 ; 124) présente au moins un dispositif de réglage de rotation (33) pour la rotation et/ou au moins un dispositif de réglage linéaire (75) pour le réglage linéaire de la au moins une zone de maintien d'outil (32, 32' ; 132).

7. Agencement de machine d'usinage selon l'une quelconque des revendications précédentes, **caractérisé en ce que** la au moins une zone de maintien d'outil (32, 32' ; 132) est prévue sur au moins une partie de base (26) pratiquement indéformable.

8. Agencement de machine d'usinage selon l'une quelconque des revendications précédentes, **caractérisé en ce que** le chargeur d'outil (24 ; 124) comprend au moins un bras pivotant (27, 27'; 72), sur lequel est disposé la au moins une zone de maintien d'outil (32, 32' ; 132), le bras pivotant pouvant basculer à partir de l'espace d'accès de robot (28) dans l'espace d'accès de broche (29) et inversement.

9. Agencement de machine d'usinage selon l'une quelconque des revendications précédentes, **caractérisé en ce que** le chargeur d'outil (24 ; 124) présente au moins deux zones de maintien d'outil (32' ; 132) pouvant être déplacées alternativement dans l'espace d'accès de robot (28) et l'espace d'accès de broche (29), de sorte que la au moins une broche d'outil (30 ; 130) et le robot (12) peuvent changer pratiquement simultanément des outils (13) sur respectivement une zone de maintien d'outil (32' ; 132).

10. Agencement de machine d'usinage selon la revendication 9, **caractérisé en ce que** les au moins deux zones de maintien d'outil (32' ; 132) pouvant être amenées alternativement dans l'espace d'accès de robot (28) et l'espace d'accès de broche (29) sont disposées sur un premier et au moins un second bras pivotant (27', 72), lesquels peuvent basculer dans le sens contraire dans l'espace d'accès de robot (28) et dans l'espace d'accès de broche (29).

11. Agencement de machine d'usinage selon la revendication 10, **caractérisé en ce que** le premier et le au moins un second bras pivotant (27', 72) peuvent être positionnés de façon linéaire l'un par rapport à l'autre de telle sorte que, lors d'une rencontre des bras pivotants (27', 72) dans le cadre d'un mouvement de basculement opposé effectué par un mouvement d'évitement linéaire d'au moins un bras pivotant (27', 72), un espace de mouvement est prévu.

12. Agencement de machine d'usinage selon la revendication 10 ou 11, **caractérisé en ce que** le premier bras pivotant (27') peut basculer de façon exclusive et le au moins un second bras pivotant (72) est mobile de façon basculante et de façon linéaire par rapport au premier bras basculant (27').

13. Agencement de machine d'usinage selon l'une quelconque des revendications 10 à 12, **caractérisé en ce que** le premier bras pivotant (27') et le au moins un second bras pivotant (72) peuvent être déplacés dans des positions de changement d'outil sensiblement identiques pour la au moins une broche d'outil (30 ; 130) à l'intérieur de l'espace d'accès de broche (29) et/ou pour le robot (12) à l'intérieur de l'espace d'accès de robot (28).

14. Agencement de machine d'usinage selon l'une quelconque des revendications 10 à 13, **caractérisé en ce que** le au moins un second bras pivotant (27 ; 27', 72) est coudé, une partie coudée étant agencée en passant devant un logement rotatif, en particulier un entraînement de rotation (33), du premier bras pivotant (27 ; 27', 72).

15. Agencement de machine d'usinage selon la revendication 9, **caractérisé en ce que** les au moins deux zones de maintien d'outil (32, 32' ; 132) pouvant être amenées dans l'espace d'accès de robot (28) et l'espace d'accès de broche (29) sont des zones en particulier opposées les unes par rapport aux autres d'un dispositif de maintien (116) rotatif, les au moins deux zones de maintien d'outil (32, 32' ; 132) pouvant tourner ou basculer par un mouvement de rotation ou de basculement simultanément dans l'espace d'accès de robot (28) ou l'espace d'accès de broche (29).

16. Agencement de machine d'usinage selon la revendication 15, **caractérisé en ce que** le dispositif de maintien (116) a un contour extérieur sensiblement polygonal, en particulier carré, ou rond.

17. Agencement de machine d'usinage selon l'une quelconque des revendications précédentes, **caractérisé en ce que** le chargeur d'outil (24 ; 124) est disposé sur un bâti (16-20) de la machine d'usinage (11 ; 111).

18. Agencement de machine d'usinage selon l'une quelconque des revendications précédentes, **caractérisé en ce que** la machine d'usinage (11 ; 111) présente une machine multibroche avec au moins deux broches d'outil (30 ; 130) disposées le long d'une ligne l'une à côté de l'autre, et **en ce que** la au moins une zone de maintien d'outil (32, 32' ; 132) présente des porte-outils (31 ; 131) disposés l'un à côté de l'autre par rapport à la ligne, de sorte que les au moins deux broches d'outil (30 ; 130) prélèvent simultanément plusieurs outils (13) des porte-outils (31, 131) ou peuvent les déposer à cet endroit.

19. Agencement de machine d'usinage selon l'une quelconque des revendications précédentes, **caractérisé en ce que** la ligne est sensiblement droite.

20. Agencement de machine d'usinage selon l'une quelconque des revendications précédentes, **caractérisé en ce que** sur le bras (15) du robot (12) est disposé un logement d'outil qui présente des porte-outils (23) disposés en fonction d'une configuration des broches d'outil (30 ; 130) de la machine d'usinage (11 ; 111) conçue comme machine multibroche, de sorte que le robot (12) peut prélever plusieurs outils simultanément des porte-outils (31, 131) du chargeur d'outil (24 ; 124) ou peut les déposer à cet endroit.

21. Agencement de machine d'usinage selon l'une quelconque des revendications précédentes, **caractérisé en ce que** la réserve présente au moins un bâti (16-20) en particulier en forme d'armoire pour la dépose d'outils (13) par le robot (12).

22. Agencement de machine d'usinage selon la revendication 21, **caractérisé en ce que** plusieurs bâtis (16-20) sont disposés en forme de bague autour du robot (12) dans la zone d'accès du bras de robot (15).

23. Agencement de machine d'usinage selon la revendication 21 ou 22, **caractérisé en ce que** le au moins un bâti (16-20) présente plusieurs groupes de porte-outils (57, 57') disposés en particulier verticalement les uns au-dessus des autres et/ou horizontalement les uns à côté des autres avec des porte-outils (31 ; 131) disposés en fonction d'une configuration des broches d'outil (30 ; 130) de la machine d'usinage (11 ; 111) conçue comme machine multibroche.

24. Agencement de machine d'usinage selon l'une quelconque des revendications 21 à 23, **caractérisé en ce que** le robot (12) est disposé dans un espace de travail de robot (14), en direction duquel le au moins un bâti (16-20) est ouvert côté avant et est accessible pour le robot (12), et **en ce que** le au moins un bâti (16-20) fermé en particulier côté arrière forme un composant d'une délimitation par barrière (59) de l'espace de travail de robot (14).

25. Agencement de machine d'usinage selon l'une quelconque des revendications précédentes, **caractérisé en ce que** le robot (12) est prévu pour un changement de pièces à usiner et usinées par la machine d'usinage (11 ; 111).

26. Procédé pour l'exploitation d'un agencement de machine d'usinage (10, 100) avec une machine d'usinage (11 ; 111) et un robot (12) avec un bras de robot (15) à plusieurs articulations, qui équipe la machine d'usinage (11 ; 111) avec des outils à partir d'une réserve d'outils (21) pour un usinage de pièce et prélève des outils (13) usagés de la machine d'usinage (11 ; 111), **caractérisé en ce que**
- le robot prélève un chargeur d'outil (24 ; 124) de la machine d'usinage (11 ; 111) avec des outils (13) provenant du stock d'outils (21) et prélève des outils usagés du chargeur d'outil (24 ; 124),
- **en ce que** le chargeur d'outil (24 ; 124) met à disposition les outils (13) pour la machine d'usinage (11 ; 111) et
- **en ce que** le chargeur d'outil (24 ; 124) déplace, en particulier bascule au moins une zone de maintien d'outil (32, 32'; 132) avec plusieurs porte-outils (31, 131) alternativement dans un espace d'accès de robot (28) pour un changement d'outil par le robot (12) et dans un espace d'accès de broche (29) pour un changement d'outil pour le changement simultané d'outils (13) sur au moins deux broches d'outil (30 ; 130) de l'agencement de machine d'usinage (10, 100).
